# EUROPÄISCHE PATENTSCHRIFT

(11) **EP 3 265 733 B1**
(45) Veröffentlichungstag und Bekanntmachung des Hinweises auf die Patenterteilung: **08.05.2019**
(21) Anmeldenummer: 16707149.7
(22) Anmeldetag: 02.03.2016
(51) Int. Cl.: B01D 53/56, C04B 7/36, C04B 7/43, C04B 7/44, F27B 7/20, C04B 7/60, F27D 17/00

(54) **VERFAHREN UND ANLAGE ZUR ENTSTICKUNG VON BYPASSGASEN IN EINEM MEHRSTUFIGEN SYSTEM VON MISCHKAMMERN BEI EINER ANLAGE ZUR HERSTELLUNG VON ZEMENTKLINKER**
METHOD AND PLANT FOR DENITRIFYING BYPASS GASES IN A MULTI-STAGE SYSTEM OF MIXING CHAMBERS IN A PLANT FOR PRODUCING CEMENT CLINKER
PROCÉDÉ ET INSTALLATION DE DÉNITRIFICATION DU GAZ PERDU DE DÉRIVATION DANS UN SYSTÈME À MULTIPLES ÉTAGES DE CHAMBRES DE MÉLANGE DANS UNE INSTALLATION DE FABRICATION DE CLINKER

(30) Priorität: 04.03.2015 DE 102015002688
(43) Veröffentlichungstag der Anmeldung: 10.01.2018
(73) Patentinhaber: KHD Humboldt Wedag GmbH, 51067 Köln (DE)
(72) Erfinder: SCHÜRMANN, Heiko, 51373 Leverkusen (DE); NASSENSTEIN, Florian, 51766 Engelskirchen (DE); HAND, Andreas, 51503 Rösrath (DE); GUSSMANN, Rolf, 50968 Köln (DE)
(86) Internationale Anmeldenummer: PCT/EP2016/054381
(87) Internationale Veröffentlichungsnummer: WO 2016/139225

(56) Entgegenhaltungen:
- EP-A1- 2 287 126
- WO-A1-01/55048
- WO-A1-2012/176161
- US-A1- 2012 315 590
- Bernward Goedecke ET AL: "High Efficiency SNCR for Non- Calciner Kilns - Po- tentials and Limits", , 2. Januar 2013 (2013-01-02), XP055265145, Gefunden im Internet: URL:http://air-q-gov.baes.by/userfiles/fil e/air_q_RU/CD/chapter_6/6-1-2.pdf [gefunden am 2016-04-13]
- "Alternative Control Techniques Document Update -NO x Emissions from New Cement Kilns", , 26. November 2007 (2007-11-26), XP055265149, Gefunden im Internet: URL:https://www3.epa.gov/ttncatc1/dir1/cem ent_updt_1107.pdf [gefunden am 2016-04-13]

## Beschreibung

Die Erfindung betrifft ein Verfahren zur Entstickung von Bypassabgasen in einer Anlage zur Herstellung von Zementklinker wie in EP2287126A1 offenbart, wobei die Anlage einen Drehrohrofen zur Sinterung von Rohmehl zu Zementklinker und in Ofenabgasflussrichtung hinter dem Drehrohrofen einen Calcinator zur Entsäuerung des Rohmehls aufweist, der Drehrohrofen eine Drehrohrofeneinlaufkammer aufweist, die direkt oder über einen Ofensteigschacht mit dem Calcinator verbunden ist, und das Bypassabgas im Bereich der Drehrohrofeneinlaufkammer abgezogen wird. Die Erfindung betrifft ferner eine korrespondierende Anlage zur Entstickung von Bypassabgasen bei der Herstellung von Zementklinker, aufweisend einen Drehrohrofen zur Sinterung von Rohmehl zu Zementklinker, wobei der Drehrohrofen eine Drehrohrofeneinlaufkammer aufweist, einen Calcinator zur Entsäuerung des Rohmehls, wobei die Drehrohrofeneinlaufkammer direkt oder über einen Ofensteigschacht mit dem Calcinator verbunden ist, und eine Abzugsvorrichtung zum Abziehen der Bypassabgase aus dem Bereich der Drehrohrofeneinlaufkammer.

Innerhalb des Gesamtprozesses der Zementproduktion werden Anlagen eingesetzt, in denen silikathaltiges und carbonathaltiges Rohmehl in einem Drehrohrofen zu Zementklinker gesintert wird. Bei der Sinterung im Drehrohrofen, die bei Temperaturen von bis zu ca. 1450 °C abläuft, entstehen Rauchgase, die als heiße Abgase den Drehrohrofen in der zum Materialstrom entgegengesetzten Richtung durch die Einlaufkammer des Drehrohrofens verlassen. Die Ofenabgase strömen dann im Normalfall in eine Calcinierungszone, in der das Rohmehl entsäuert wird. Die Calcinierungszone ist im häufigsten Falle in einem Ofensteigschacht oder in einem Calcinator bzw. in einem Ofensteigschacht und einem (in Gasstromrichtung) anschließenden Calcinator ausgebildet. Das Rauchgas strömt dann weiter in einen Wärmetauscher, bspw. ausgebildet als mehrstufiger Zyklon-Wärmetauscher, der zur Vorwärmung des Rohmehls dient. Problematisch beim Prozess der Zementklinkerherstellung ist die Entstehung bzw. Freisetzung einer Reihe von Schadstoffen. Insbesondere entstehen aufgrund der hohen Temperaturen der Brennerflammen (ca. 1800 °C bis 2000 °C) Stickoxide (NOₓ) im Drehrohrofen durch Verbrennung des in der atmosphärischen Luft enthaltenen Stickstoffs. Auch der benötigte Brennstoff, insbesondere beim Einsatz von sekundären Brennstoffen wie den aus Abfall gewonnenen Ersatzbrennstoffen, stellt eine Quelle für Stickoxide dar. Da Stickoxide negative Auswirkungen auf Mensch und Umwelt - bspw. als Verursacher saueren Regens und durch Abbau von Ozon in der Stratosphäre - haben, gibt es strenge Grenzwerte für die Emission von Stickoxiden in die atmosphärische Umwelt. Bei der Zementherstellung müssen daher Verfahren zur Entstickung der Rauchgase eingesetzt werden.

Ein weiteres Problem besteht darin, dass die Rohstoffe für die Zementklinkerherstellung sowie die eingesetzten Brennstoffe, insbesondere sekundäre Brennstoffe, Nebenbestandteile (Alkaliverbindungen, Chlor, Schwefelverbindungen, Schwermetalle etc.) enthalten, die nicht nur abträglich für die Qualität des Brennprozesses bzw. des Zementklinkers sein können, sondern auch nachteilige Stoffkreisläufe in der Anlage zur Zementklinkerherstellung ausbilden können. Beispielsweise kommt es im Drehrohrofen zur Verdampfung von Alkalisulfaten und Alkalichloridverbindungen, z.B. Kaliumchlorid (KCl). Mit dem Ofenabgas gelangen diese Verbindungen durch die Ofeneinlaufkammer in die Calcinierungszone und den Wärmetauscher, wobei sie in den kühleren Bereichen an den Rohmehlpartikeln kondensieren und mit dem Materialstrom wieder in den Drehrohrofen gelangen, wo sie erneut verdampfen. Über die Nachteile solcher Stoffkreisläufe für den Zementklinker und den Brennprozess hinaus entstehen bei rascher Abkühlung und Kondensation dieser Verbindungen durch Erstarrung Anbackungen an den Wandungen der kühleren Abschnitte des Kreislaufs, so dass sich mit der Zeit die Anlage zusetzen kann.

Aus der Patentschrift DE 197 18 259 B4 ist es bekannt, zur Unterdrückung solcher Stoffkreisläufe in Anlagen zur Zementklinkerherstellung und zur Reduzierung des Gehalts kreislaufbildender Stoffe einen Teil des Rauchgases, das als Ofenabgas aus dem Drehrohrofen strömt, im Bereich der Drehrohrofeneinlaufkammer als Bypass abzuziehen. Die Formulierung ,im Bereich der Drehrohrofeneinlaufkammer' meint hier und im Folgenden stets einen Abzug aus der Drehrohrofeneinlaufkammer oder auch einen Abzug aus dem unteren Ende eines etwaig gegebenen Ofensteigschachts. Auch das Bypassabgas enthält jedoch einen hohen Gehalt an Stickoxiden, so dass auch für das Bypassabgas eine Rauchgasentstickung vorgenommen werden muss.

Ein verbreitetes Verfahren für die Entstickung von Rauchgasen besteht darin, in einen Reaktionsraum zu den stickoxidbelasteten Rauchgasen eine wässrige Ammoniaklösung, Ammoniak (NH₃) oder Ammoniak freisetzende Verbindungen einzugeben (s. etwa den in der EP 0 854 339 A1 enthaltenen Vorschlag). Die Entstickung verläuft dann gemäß dem Verfahren der Selektiven nichtkatalytischen Reduktion (SNCR), bei dem Ammoniak durch Thermolyse mit den Stickoxiden zu Stickstoff und Wasser umgesetzt wird. Diese Reaktionen verlaufen bevorzugt in einem Temperaturfenster von 800 °C bis über 950 °C. Ferner ist für eine effektive Umsetzung eine präzise einzustellende Zeitspanne, jedenfalls eine Mindestzeit, für die Prozesse im Reaktionsraum zu realisieren. Eine Entstickung nach dem SNCR-Verfahren erweist sich jedoch im Falle der erwünschten Bypassabgasentstickung als problematisch, da die Temperaturen des abgezogenen Bypassabgases zu hoch sind und auch die Einhaltung der Verweilzeit im Reaktionsraum hohe Anforderungen an die Prozessführung stellt. Die Temperatur der Abgase im Ofen von bis zu ca. 1250 °C fällt zwar beim Eintritt in die Drehrohrofeneinlaufkammer und den unteren Teil eines etwaig vorhandenen Ofensteigschachtes, jedoch sind die dann noch vorherrschenden Gastemperaturen von um die 1150 °C immer noch so hoch, dass zugegebene Reduktionsmittel verbrennen würden.

Es ist die Vorgehensweise bekannt (DE 197 18 259 B4, DE 199 10 927 A1), den heißen Bypassabgasstrom in Mischkammern, in denen ein Kühlmedium wie Wasser oder Luft eingedüst und mit dem Gasstrom möglichst weitgehend vermischt wird, rasch abzukühlen, vorzugsweise auf nur einige Hundert °C. Das hat zwar den Vorteil, dass verdampfte Stoffe, die aus den Schadstoffkreisläufen abgezogen sind, auf den Oberflächen der Festkörperpartikel kondensieren und dann durch Staubfilter zusammen mit diesen abgetrennt werden können. Für eine effektive Entstickung ist dieses Vorgehen jedoch nicht geeignet.

In der deutschen Patentanmeldung mit dem Aktenzeichen 10 2013 016 701.9 wird ein Verfahren zur Entstickung von Bypassabgasen in einer Anlage zur Herstellung von Zementklinker offenbart, bei dem das Bypassabgas zunächst etwa in einer Mischkammer auf Temperaturen zwischen 260° C und 400 °C abgekühlt wird. Danach werden in das gekühlte Bypassabgas ammoniak-, harnstoff- und / oder ammoniumhaltige Stoffe eingegeben. Dies hat zur Folge, dass die Stickoxide anschließend an einem in einer keramischen Filteranordnung vorhandenen und / oder der keramischen Filteranordnung unmittelbar folgenden Katalysator in Präsenz der ammoniak-, harnstoff- und / oder ammoniumhaltigen Stoffe chemisch selektiv reduziert werden. Die Entstickung beruht hier also methodisch auf dem Verfahren der Selektiven katalytischen Reduktion (SCR). Investitions-und Betriebskosten für den bei der SCR benötigten Katalysator bzw. katalytischen Filter sind jedoch vergleichsweise hoch. Insbesondere bei vergleichweise geringen Bypassabgasvolumenströmen kann sich dies als wirtschaftlich nicht sehr günstig erweisen, so dass alternative Vorgehensweisen vorteilhaft erscheinen.

Aufgabe der Erfindung ist es daher, ein effektives Verfahren zur Entstickung von Bypassabgasen in einer Anlage zur Herstellung von Zementklinker anzugeben, bei dem auf den Einsatz von SCR-Katalysatoren verzichtet werden kann. Ferner gehört es zur Aufgabe der Erfindung, eine zu diesem Verfahren korrespondierende Anlage zur Entstickung von Bypassabgasen vorzuschlagen.

Die erfindungsgemäße Aufgabe wird gelöst durch Führen des Bypassabgases in eine erste Mischkammer, wobei das Bypassabgas in der ersten Mischkammer auf eine Temperatur zwischen 800 °C und 950 °C abgekühlt wird, Führen des Bypassabgases aus der ersten Mischkammer durch eine in einer Rohrleitung angeordnete Reaktionsstrecke, wobei die Verweilzeit des Bypassabgases in der Reaktionsstrecke zwischen 0,5 s und 3 s beträgt und wobei in die Reaktionsstrecke Ammoniak, wässrige Ammoniaklösung oder Ammoniak freisetzende Stoffe zur Entstickung des Bypassabgases gemäß dem Verfahren der Selektiven nichtkatalytischen Reduktion (SNCR) eingedüst werden, Führen des Bypassabgases von der Reaktionsstrecke in eine zweite Mischkammer, wobei das Bypassabgas in der zweiten Mischkammer auf eine Temperatur zwischen 150 °C und 250 °C abgekühlt wird, und durch Führen des Bypassabgases aus der zweiten Mischkammer zu mindestens einem Filter zur Entstaubung des Bypassabgases. Weitere vorteilhafte Ausgestaltungen des Verfahrens sind in den Unteransprüchen zu Anspruch 1 angegeben. Die erfindungsgemäße Aufgabe wird ferner durch eine zu diesem Verfahren korrespondierende Anlage zur Entstickung von Bypassabgasen bei der Herstellung von Zementklinker mit den Merkmalen des Anspruchs 6 gelöst. Weitere vorteilhafte Ausgestaltungen der Anlage sind in den Unteransprüchen zu Anspruch 6 angegeben.

Erfindungsgemäß ist also nach Abzweigung des Bypassabgasstromes ein mehrstufiges Bypass-System vorgesehen, bei dem das heiße Bypassabgas zunächst in einer ersten Mischkammer auf eine Temperatur zwischen 800 °C und 950 °C abgekühlt wird. Damit ist in dem stickoxidbelasteten Bypassabgas ein Temperaturfenster eingestellt, das für eine SNCR günstig ist. Im Vergleich zu den genannten herkömmlichen Verfahren, bei denen die Bypassabgastemperatur in einem Schritt typischerweise auf Temperaturen von 200 °C bis 400 °C abgesenkt wird, werden die Temperaturen hier also nicht in einem Schritt abgesenkt. Dies würde ein Vorgehen gemäß SNCR ausschließen. Durch entsprechende Einrichtung des inneren Aufbaus der Mischkammer, insbesondere der Weglänge für den Gasstrom, und geeignete Dosierung der eingedüsten Kühlmedien erreicht der Fachmann vielmehr die gewünschte Abkühlung auf 800 °C bis 950 °C. Das Verfahren wird im nächsten Schritt durch die eigentliche Entstickung, nämlich durch Eindüsung von Ammoniak, wässriger Ammoniaklösung oder Ammoniak freisetzenden Stoffen in eine Reaktionsstrecke, die in einem Reaktorhohlraum, vorrangig als Rohrleitung ausgeführt, angeordnet ist, fortgesetzt. Die Entstickung beruht hier auf der SNCR-Methode, benötigt also im Vergleich zur SCR-Methode keine kostenintensiven und im Betrieb aufwendigen Katalysatoren. Der für eine effektive Entstickung notwendige weitere Parameter, nämlich die Verweilzeit des Bypassabgases in der Reaktionsstrecke (0,5 bis 3 Sekunden), wird durch die Dimensionierung der Rohrleitung, also insbesondere durch deren Länge sowie deren Querschnittsfläche, eingestellt. Damit findet eine weitreichende Entstickung ohne zu große Bauvolumina einerseits und unter Vermeidung zu geringer Strömungsgeschwindigkeiten des Bypassabgases andererseits statt. Die erfindungsgemäße Prozessführung sieht dann ein Abkühlen des entstickten Bypassabgases in einer zweiten Mischkammer vor. Die angestrebte Endtemperatur zwischen 150 °C und 250 °C wird hier durch schnelle Abkühlung erreicht, so dass auch andere Schadstoffe, wie bei herkömmlichen, mit rascher Abkühlung (Abschreckung) arbeitenden Verfahren, am Staub kondensieren und an einem sich anschließenden Filter zusammen mit den Festkörperpartikeln abgetrennt werden. Geeignet sind z.B. Gewebefilter / Tuchfilter / Schlauchfilter.

In einer bevorzugten Ausgestaltung ist vorgesehen, dass die Verweilzeit des Bypassabgases in der Reaktionsstrecke zwischen einer und zwei Sekunden beträgt. Eine solche Passierdauer des Bypassabgases erweist sich als am besten geeignet, um bei den Temperaturwerten von 800 °C bis 950 °C, die im vorangehenden Verfahrensschritt in der ersten Mischkammer durch Kühlung eingestellt werden, eine effiziente, weitreichende Entstickung des Bypassabgases mit Selektiver nichtkatalytischer Reduktion (SNCR) zu erreichen, ohne dass die Reaktionsstrecke für eine noch längere Verweildauer des Bypassabgases eingerichtet werden müsste. Da die Reaktionsstrecke als Zone in einer Rohrleitung bzw. in einem rohrleitungsähnlichen Hohlraum ausgebildet ist, kann die Verweildauer durch die Dimensionierung, d.h. die Abmaße der Rohrleitung anhand der typischen Werte in der jeweiligen, konkreten Anlage bestimmt werden. Für Feinabstimmungen oder zum Ausgleich von Schwankungen der Strömungsgeschwindigkeit des Bypassabgases im Betrieb der Anlage zur Herstellung von Zementklinker lassen sich ferner die Entnahme des Volumenstroms des Bypassabgases anpassen oder die Strömungsgeschwindigkeit in der Rohrleitung mit der Reaktionsstrecke, etwa durch Veränderung der Querschnittsfläche, variieren.

In Ausgestaltung der Erfindung ist vorgesehen, dass das Bypassabgas in der zweiten Mischkammer vorzugsweise auf eine Temperatur zwischen 180 °C und 220 °C abgekühlt wird. Vorrangig ist hier auf eine schnelle Abkühlung des Bypassabgases zu achten. Dabei wird in diesem Temperaturfenster weitgehend verhindert, dass sich Dioxine (chlorierte und polychlorierte Dibenzodioxine) und Furane (chlorierte und polychlorierte Dibenzofurane) bilden. Darüber hinaus wird beim schnellen Erreichen dieser Endtemperatur am effektivsten eine Kondensation von Schadstoffen am Staub erreicht, welcher dann anschließend im Filter abgeschieden wird.

Erfindungsgemäß besteht das System zur Reinigung des abgezogenen Bypassabgases aus einem mehrstufigen, zwei Mischkammern umfassenden System, wobei bei Bedarf auch weitere Mischkammern vorgesehen werden können. Bei an sich bekannten Mischkammern wird ein Kühlmedium, typischerweise Luft oder Wasser, in die Mischkammer eingedüst, das sich durch geeignete Führung des Gasstroms in der Mischkammer mit dem Bypassabgas vermischt und das Bypassabgas dabei rasch abkühlt. Dementsprechend ist als bevorzugte Ausgestaltung der Erfindung vorgesehen, dass in die zweite Mischkammer als Kühlmedium Wasser oder Frischluft oder eine Kombination aus Wasser und Frischluft eingedüst wird. Nach einer Ausführungsform wird auch in die erste Mischkammer, auch benennbar als Vormischkammer, Wasser oder Frischluft oder eine Kombination aus Wasser und Frischluft eingedüst. Die Eindüsung von Wasser in eine Mischkammer erfolgt dabei vorteilhaft unter Zerstäubung in ein Spray etwa unter Verwendung von Zweistoff-Düsen. Grundsätzlich kann die Eindüsung von Frischluft (etwa atmosphärischer Umgebungsluft) und / oder Wasser an verschiedenen Stellen verteilt über die Mischkammerwandung geschehen, wobei eine möglichst weitgehende Mischung und gleichmäßige Kühlung anzustreben sind. In besonderer Ausgestaltung der Erfindung werden als Kühlmedium Frischluft, Wasser und kaltes Rohmehl oder eine beliebige Kombination, also ein, zwei oder drei Komponenten daraus, in die erste Mischkammer eingeführt. Die Eindüsung von Kaltmehl hat den zusätzlichen Vorteil einer Verringerung des Schwefeldioxid-Gehalts im Bypassabgas, wobei das Rohmehl mit der Oberfläche seiner Partikel auch im weiteren Verlauf als Sorbent für Schadstoffreinigung zur Verfügung steht. Darüber hinaus kann in der ersten Mischkammer als Kühlmedium bzw. als Bestandteil in der genannten Kühlmedienkombination auch Heißmehl eingesetzt werden, wenn dieses noch nicht entsäuert ist.

Um eine kontinuierliche, gleichmäßige Gasströmung in dem Bypass-System aufrechtzuerhalten, können Saugzuggebläse bzw. Ventilatoren eingesetzt werden. In einer Ausgestaltung der Erfindung ist vorgesehen, in Gasflussrichtung hinter dem mindestens einen Filter einen Ventilator anzuordnen. Dies kann auch ein motorischer Verdichter sein. Anschließend wird das gereinigte Bypassabgas im Normalfall über einen Kamin in die Umgebung abgegeben, wobei es jedoch auch für eine etwaige Wiedereinspeisung an einer geeigneten Stelle innerhalb des Gesamtprozesses der Zementherstellung zur Verfügung steht.

Eine weitere Ausführung der Erfindung besteht darin, in die Reaktionsstrecke mindestens ein Sorbens zur zusätzlichen Reinigung des Bypassabgases von Schadstoffen einzugeben, wofür im Bereich der Rohrleitung, in der die Reaktionsstrecke besteht, mindestens eine Vorrichtung zum Eingeben von mindestens einem solchen Sorbens angeordnet ist. Grundsätzlich kommen hier alle chemischen Verbindungen bzw. Sorbentien in Betracht, die innerhalb der Passierdauer des Bypassabgases durch die Reaktionsstrecke und bei den dort gegebenen Temperaturen geeignet sind, für einen Schadstoffabbau zu sorgen. Hierbei kann in der ersten Mischkammer definiert die Temperatur eingestellt werden, die für die jeweilige Reaktion benötigt wird. Zu einer Entschwefelung können hier beispielsweise Calciumverbindungen wie Calciumcarbonat beitragen, ebenso zu einer Reduzierung weiterer saurer Bestandteile im rauchgasartigen Bypassabgas. Aktivkohle stellt große Oberflächen für die Adsorption von Schadstoffen, bspw. von Schwermetallen wie Quecksilber, zur Verfügung. Eine Abscheidung findet dann in der Filtereinheit statt.

Die Erfindung ist hier auf die Durchführung der SNCR-Entstickung ausgerichtet, aber nicht auf diesen wichtigen Fall begrenzt. Der Anlagenaufbau des Bypass-Systems ermöglicht prinzipiell das Einstellen eines Temperaturfensters durch Kühlung eines heißen Abgasstromes in einer ersten Mischkammer und das anschließende Einrichten eines Zeitfensters für das Verweilen des Gasstromes in einer Reaktionsstrecke. Hier können Temperatur- und Zeitintervalle auch so realisiert werden, dass bei Eindüsung geeigneter chemischer Verbindungen bzw. Sorbentien in die Reaktionsstrecke andere Reaktionen bzw. Verfahren zur Reinigung des Abgases von Schadstoffen favorisiert werden. Der Fachmann vermag hier das Prinzip auf diejenige Schadstoffgruppe zu übertragen, deren Entfernung aus dem Abgasstrom, etwa orientiert an Grenzwerten, vorrangig ist.

Darüber hinaus ist die Erfindung nicht auf Anlagen beschränkt, die einen Calcinator aufweisen, da das Abziehen der Bypassgase bereits im Bereich der Drehrohrofeneinlaufkammer erfolgt. Der erfindungsgemäße Prozess der Bypassabgasreinigung in dem vorgeschlagenen Bypassmischkammersystem ist vielmehr universell für eine Ofenabgasreinigung einsetzbar.

Die Erfindung wird anhand der folgenden Figur näher erläutert. Es zeigt:

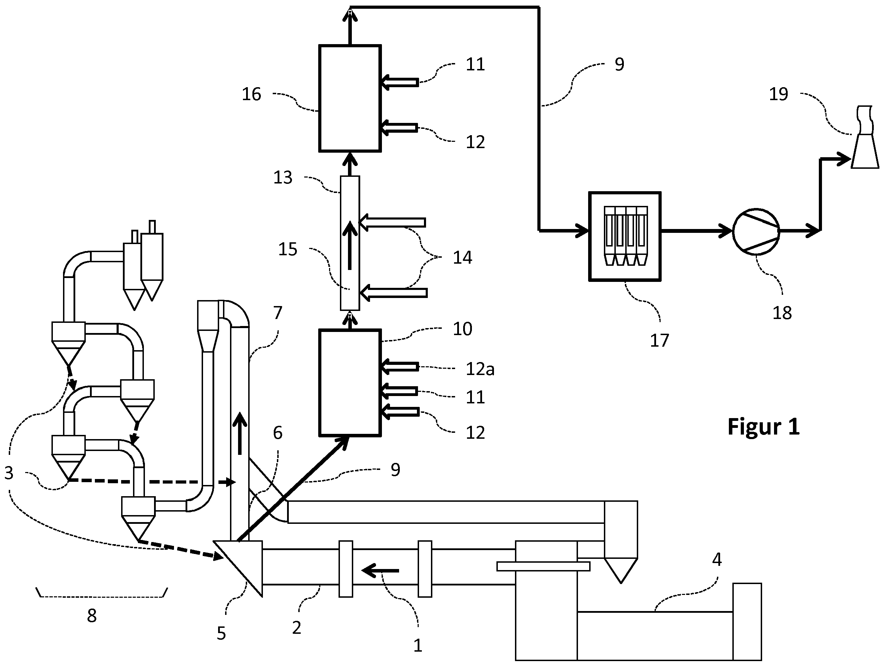

- Fig. 1: eine schematische Darstellung des erfindungsgemäßen Verfahrens zur Entstickung von Bypassabgasen in einer Anlage zur Herstellung von Zementklinker.

In **Figur 1** ist schematisch ersichtlich, dass Rauchgas 1 aus einem Drehrohrofen 2, in dem Rohmehl 3 zu Zementklinker gesintert wird, der dann in einem Klinkerkühler 4 gekühlt wird, in die Drehrohrofeneinlaufkammer 5 strömt. In Gasstromrichtung schließen sich im dargestellten Ausführungsbeispiel ein Ofensteigschacht 6 und ein Calcinator 7 zur Entsäuerung des Rohmehls 3 an. Ein Anteil des Rauchgases 1 (Ofenabgas) strömt durch Ofensteigschacht 6 und Calcinator 7 in den Wärmetauscher 8 (hier ein mehrstufiger Zyklon-Wärmetauscher), der zur Vorwärmung des Rohmehls 3 für die Zementherstellung dient.

Erfindungsgemäß wird ein Teil des aus dem Drehrohrofen 2 austretenden Rauchgasstroms 1 im Bereich der Drehrohrofeneinlaufkammer 5, d.h. aus der Drehrohrofeneinlaufkammer 5 oder aus dem Ofensteigschacht 6, als Bypassabgas 9 abgezogen. Das Bypassabgas 9, das zunächst beim Austritt aus dem Drehrohrofen 2 typischerweise Temperaturen von um die 1200 °C bis 1300 °C und am Ort des Abzugs Temperaturen um die 1.000 °C bis 1200 °C aufweist, wird zu der ersten Mischkammer 10 geleitet. In die erste Mischkammer 10 können als Kühlmedien Frischluft 11, Wasser 12 oder Kaltmehl 12a oder auch Heißmehl sowie beliebige Mischungen davon eingegeben werden. Im dargestellten Ausführungsbeispiel werden atmosphärische Frischluft 11, Wasser 12 und Kaltmehl 12a eingedüst, wobei kaltes, also nicht schon im Wärmetauscher erhitztes Rohmehl vorteilhaft insbesondere für eine Verminderung des Schwefeldioxidgehalts im Bypassabgas ist. In der ersten Mischkammer 10 wird durch weitgehende Mischung des Bypassabgases 9 mit den Kühlmedien eine Abkühlung des Bypassabgases 9 auf Temperaturen zwischen 800 °C und 950 °C erreicht.

Nach Austritt aus der ersten Mischkammer 10, d.h. nach der ersten Kühlstufe, gelangt das Bypassabgas 9 in eine Rohrleitung 13. In die Rohrleitung 13 werden Ammoniak, wässrige Ammoniaklösung oder Ammoniak freisetzende Substanzen 14 eingedüst. Dabei sind die Strömungsgeschwindigkeit des Bypassabgases und die Dimensionierung der Rohrleitung 13 gerade so aufeinander abgestimmt, dass sich eine Verweildauer des Bypassabgases 9 in der Rohrleitung 13 von 0,5 s bis 3 s, bevorzugt zwischen 1 s und 2 s, ergibt. Damit sind die Temperaturverhältnisse des Bypassabgases 9 und die Verweildauer so eingestellt, dass eine effektive Entstickung des Bypassabgases nach dem Verfahren der Selektiven nichtkatalytischen Reduktion (SNCR) auf einer sich im Inneren der Rohrleitung ausbildenden Reaktionsstrecke 15 stattfindet. Ammoniak 14 wird dabei durch Thermolyse zu Stickstoff und Wasser umgesetzt. Für eine solche SNCR wären die Temperaturen des Bypassabgases 9 ohne bzw. vor Kühlung in der ersten Mischkammer 10 zu hoch, da die Reduktionsmittel bei solch hohen Temperaturen verbrennen würden. Ein zusätzliches Eingeben von Sorbentien, die für eine weitere Schadstoffreinigung des Bypassabgases 9 sorgen, ist im Bereich der Reaktionsstrecke 15 möglich.

Nach vollzogener Entstickung durch SNCR in der Reaktionsstrecke 15 wird das Bypassabgas 9 in eine zweite Mischkammer 16 geführt. In der zweiten Mischkammer 16 wird es rasch auf die gewünschte Endtemperatur zwischen 150 °C und 250 °C, bevorzugt zwischen 180 °C und 220 °C, gekühlt. Diese zweite Kühlstufe wird durch Eindüsung von Wasser 12 und / oder Frischluft 11 in die zweite Mischkammer 16 vollzogen. Eine schnelle Abkühlung auf diese Temperaturen minimiert die Bildung von Dioxinen und Furanen und führt zu Schadstoffkondensation am Staub. Das so konditionierte Bypassabgas 9 wird anschließend in mindestens einem Filter 17 entstaubt. Dabei sind Gewebefilter / Tuchfilter / Schlauchfilter geeignet, wobei auch der Einsatz von Elektrofiltern sowie eine Kombination verschiedener Filtertypen in Hintereinanderschaltung vorteilhaft sein kann. Das gereinigte Bypassabgas 9 durchläuft danach im Ausführungsbeispiel einen Ventilator 18 und wird durch einen Kamin 19 abgezogen und in die Umgebung freigesetzt. In dem gesamten Bypass-System, wie insbesondere in den Mischkammern, sind eine gute Durchmischung und ein entsprechend gleichmäßiges Temperaturfeld sowie eine geeignete Bypassabgas-Strömungsgeschwindigkeit für effektive Verfahrensschritte wichtig. Je nach Anordnung und dabei auftretenden Wegeslängen kann es bei konkreten Anlagen vorteilhaft sein, Einbauten im Gasweg vorzusehen, die für eine gute Durchmischung sorgen, sowie zusätzliche Ventilatoren in der Bypass-Strecke vorzusehen, die durch kontinuierliche oder diskontinuierliche Betriebsweise Luft in die Bypassabgasströmung einbringen.

Durch den erfindungsgemäßen, gegenüber herkömmlichen Verfahrensweisen veränderten Aufbau bzw. durch die veränderte Prozessführung ist eine ebenso effektive wie bei Anschaffung und im Betrieb günstige Weise der Entstickung der Bypassabgase gegeben, die von dem Einsatz von SCR-Katalystoren absehen kann.

**BEZUGSZEICHENLISTE**

| | | | |
|---|---|---|---|
| 1 | Rauchgas | 12 | Wasser |
| 2 | Drehrohrofen | 12a | Kaltmehl |
| 3 | Rohmehl | 13 | Rohrleitung |
| 4 | Klinkerkühler | 14 | Ammoniak, wässrige Ammoniaklösung, Ammoniak freisetzende Stoffe |
| 5 | Drehrohrofeneinlaufkammer | | |
| 6 | Ofensteigschacht | 15 | Reaktionsstrecke |
| 7 | Calcinator | 16 | Mischkammer, zweite |
| 8 | Wärmetauscher | 17 | Filter |
| 9 | Bypassabgas | 18 | Ventilator |
| 10 | Mischkammer, erste | 19 | Kamin |
| 11 | Frischluft | | |

## Patentansprüche

1. Verfahren zur Entstickung von Bypassabgasen (9) in einer Anlage zur Herstellung von Zementklinker,
wobei
- die Anlage einen Drehrohrofen (2) zur Sinterung von Rohmehl (3) zu Zementklinker und in Ofenabgasflussrichtung hinter dem Drehrohrofen (2) einen Calcinator (7) zur Entsäuerung des Rohmehls (3) aufweist,
- der Drehrohrofen (2) eine Drehrohrofeneinlaufkammer (5) aufweist, die direkt oder über einen Ofensteigschacht (6) mit dem Calcinator (7) verbunden ist, und
- das Bypassabgas (9) im Bereich der Drehrohrofeneinlaufkammer (5) abgezogen wird,
**gekennzeichnet durch**
- Führen des Bypassabgases (9) in eine erste Mischkammer (10), wobei
- das Bypassabgas (9) in der ersten Mischkammer (10) auf eine Temperatur zwischen 800 °C und 950 °C abgekühlt wird,
- Führen des Bypassabgases (9) aus der ersten Mischkammer (10) durch eine in einer Rohrleitung (13) angeordnete Reaktionsstrecke (15), wobei
- die Verweilzeit des Bypassabgases (9) in der Reaktionsstrecke (15) zwischen 0,5 s und 3 s beträgt, und wobei
- in die Reaktionsstrecke (15) Ammoniak, wässrige Ammoniaklösung oder Ammoniak freisetzende Stoffe (14) zur Entstickung des Bypassabgases (9) gemäß dem Verfahren der Selektiven nichtkatalytischen Reduktion (SNCR) eingedüst werden,
- Führen des Bypassabgases (9) von der Reaktionsstrecke (15) in eine zweite Mischkammer (16), wobei
- das Bypassabgas (9) in der zweiten Mischkammer (16) auf eine Temperatur zwischen 150 °C und 250 °C abgekühlt wird, und durch
- Führen des Bypassabgases (9) aus der zweiten Mischkammer (16) zu mindestens einem Filter (17) zur Entstaubung des Bypassabgases (9).

2. Verfahren nach Anspruch 1,
wobei
die Verweilzeit des Bypassabgases (9) in der Reaktionsstrecke (15) zwischen 1 s und 2 s beträgt.

3. Verfahren nach einem der Ansprüche 1 oder 2,
wobei als Kühlmedien
- in die erste Mischkammer (10) ein, zwei oder drei Kühlmedien aus der Gruppe bestehend aus Frischluft (11), Wasser (12) und kaltem Rohmehl (12a), sowie
- in die zweite Mischkammer (16) Wasser (12) und / oder Frischluft (11) eingeführt werden.

4. Verfahren nach einem der Ansprüche 1 bis 3,
wobei
das Bypassabgas (9) in der zweiten Mischkammer (16) auf eine Temperatur zwischen 180 °C und 220 °C abgekühlt wird.

5. Verfahren nach einem der Ansprüche 1 bis 4,
wobei
in die Reaktionsstrecke (15) mindestens ein Sorbens zur zusätzlichen Reinigung des Bypassabgases (9) von Schadstoffen eingegeben wird.

6. Anlage zur Entstickung von Bypassabgasen (9) bei der Herstellung von Zementklinker,
aufweisend
- einen Drehrohrofen (2) zur Sinterung von Rohmehl (3) zu Zementklinker, wobei der Drehrohrofen (2) eine Drehrohrofeneinlaufkammer (5) aufweist,
- einen Calcinator (7) zur Entsäuerung des Rohmehls (3), wobei die Drehrohrofeneinlaufkammer (5) direkt oder über einen Ofensteigschacht (6) mit dem Calcinator (7) verbunden ist, und
- eine Abzugsvorrichtung zum Abziehen der Bypassabgase (9) aus dem Bereich der Drehrohrofeneinlaufkammer (5),
**dadurch gekennzeichnet, dass**
- eine erste Mischkammer (10) zur Abkühlung des aus dem Bereich der Drehrohrofeneinlaufkammer (5) abgezogenen Bypassabgases (9) auf eine Temperatur zwischen 800 °C und 950 °C vorgesehen ist,
- in Gasflussrichtung hinter der ersten Mischkammer (10) eine in einer Rohrleitung (13) angeordnete Reaktionsstrecke (15) vorgesehen ist, wobei
- die Rohrleitung (13) eine solche Dimensionierung aufweist, dass die Verweilzeit des Bypassabgases (9) in der Reaktionsstrecke (15) zwischen 0,5 s und 3 s beträgt, und wobei
- im Bereich der Rohrleitung (13) mindestens eine Vorrichtung zur Eindüsung von Ammoniak, wässriger Ammoniaklösung oder Ammoniak freisetzenden Stoffe (14) in die Reaktionsstrecke (15) zur Entstickung des Bypassabgases (9) gemäß dem Verfahren der Selektiven nichtkatalytischen Reduktion (SNCR) vorgesehen ist,
- hinter der Reaktionsstrecke (15) eine zweite Mischkammer (16) zur Abkühlung des Bypassabgases (9) auf eine Temperatur zwischen 150 °C und 250 °C angeordnet ist, und dass
- hinter der zweiten Mischkammer (16) mindestens ein Filter (17) zur Entstaubung des Bypassabgases (9) angeordnet ist.

7. Anlage nach Anspruch 6,
**dadurch gekennzeichnet, dass**
die Rohrleitung (13) eine solche Dimensionierung aufweist, dass die Verweilzeit des Bypassabgases (9) in der Reaktionsstrecke (15) zwischen 1 s und 2 s beträgt.

8. Anlage nach einem der Ansprüche 6 oder 7,
**dadurch gekennzeichnet, dass**
in Gasflussrichtung hinter dem mindestens einen Filter (17) ein Ventilator (18) angeordnet ist.

9. Anlage nach einem der Ansprüche 6 bis 8,
**dadurch gekennzeichnet, dass**
im Bereich der Rohrleitung (13) mindestens eine Vorrichtung zum Eingeben von mindestens einem Sorbens in die Reaktionsstrecke (15) für eine zusätzliche Reinigung des Bypassabgases (9) von Schadstoffen vorgesehen ist.

## Claims

1. A method for the denitrification of bypass exhaust gases (9) in a plant for producing cement clinker,
wherein
- the plant has a rotary kiln (2) for the sintering of raw meal (3) to cement clinker, and has a calciner (7) for the deacidification of the raw meal (3), downstream of the rotary kiln (2) in the kiln exhaust gas flow direction,
- the rotary kiln (2) has a rotary kiln inlet chamber (5) which is connected directly or via a kiln riser duct (6) to the calciner (7), and
- the bypass exhaust gas (9) is drawn off in the region of the rotary kiln inlet chamber (5),
**characterized by**
- passing of the bypass exhaust gas (9) into a first mixing chamber (10), where
- the bypass exhaust gas (9) is cooled in the first mixing chamber (10) to a temperature of between 800°C and 950°C,
- passing of the bypass exhaust gas (9) from the first mixing chamber (10) through a reaction section (15) disposed in a conduit (13), where
- the residence time of the bypass exhaust gas (9) in the reaction section (15) is between 0.5 s and 3 s, and where
- ammonia, aqueous ammonia solution or ammonia-releasing substances (14) are injected into the reaction section (15) for the denitrification of the bypass exhaust gas (9) by the process of selective non-catalytic reduction (SNCR),
- passing of the bypass exhaust gas (9) from the reaction section (15) into a second mixing chamber (16), where
- the bypass exhaust gas (9) is cooled in the second mixing chamber (16) to a temperature of between 150°C and 250°C, and by
- passing of the bypass exhaust gas (9) from the second mixing chamber (16) to at least one filter (17) for the dedusting of the bypass exhaust gas (9).

2. The method as claimed in claim 1,
wherein
the residence time of the bypass exhaust gas (9) in the reaction section (15) is between 1 s and 2 s.

3. The method as claimed in either of claims 1 and 2,
wherein cooling media introduced
- into the first mixing chamber (10) comprise one, two or three cooling media from the group consisting of fresh air (11), water (12), and cold raw meal (12a), and
- into the second mixing chamber (16) comprise water (12) and/or fresh air (11).

4. The method as claimed in any of claims 1 to 3,
wherein
the bypass exhaust gas (9) is cooled in the second mixing chamber (16) to a temperature of between 180°C and 220°C.

5. The method as claimed in any of claims 1 to 4,
wherein
the reaction section (15) is fed with at least one sorbent for the additional, pollutant-removing purification of the bypass exhaust gas (9).

6. A plant for the denitrification of bypass exhaust gases (9) in the production of cement clinker,
comprising
- a rotary kiln (2) for the sintering of raw meal (3) to cement clinker, the rotary kiln (2) having a rotary kiln inlet chamber (5),
- a calciner (7) for the deacidification of the raw meal (3), the rotary kiln inlet chamber (5) being connected directly or via a kiln riser duct (6) to the calciner (7), and
- a takeoff device for drawing off the bypass exhaust gases (9) from the region of the rotary kiln inlet chamber (5),
**characterized in that**
- a first mixing chamber (10) is provided for the cooling of the bypass exhaust gas (9), drawn off from the region of the rotary kiln inlet chamber (5), to a temperature of between 800°C and 950°C,
- downstream of the first mixing chamber (10) in the gas flow direction, a reaction section (15) is provided which is disposed in a conduit (13), where
- the conduit (13) has dimensioning such that the residence time of the bypass exhaust gas (9) in the reaction section (15) is between 0.5 s and 3 s, and where
- in the region of the conduit (13), at least one device is provided for the injection of ammonia, aqueous ammonia solution or ammonia-releasing substances (14) into the reaction section (15) for the denitrification of the bypass exhaust gas (9) by the process of selective non-catalytic reduction (SNCR),
- downstream of the reaction section (15), a second mixing chamber (16) is disposed, for the cooling of the bypass exhaust gas (9) to a temperature of between 150°C and 250°C, and **in that**
- downstream of the second mixing chamber (16) at least one filter (17) is disposed for the dedusting of the bypass exhaust gas (9).

7. The plant as claimed in claim 6, **characterized in that** the conduit (13) has dimensioning such that the residence time of the bypass exhaust gas (9) in the reaction section (15) is between 1 s and 2 s.

8. The plant as claimed in either of claims 6 and 7,
**characterized in that**
downstream of the at least one filter (17) in the gas flow direction there is a fan (18) disposed.

9. The plant as claimed in any of claims 6 to 8,
**characterized in that**
in the region of the conduit (13), at least one device is provided for feeding at least one sorbent into the reaction section (15) for additional, pollutant-removing purification of the bypass exhaust gas (9).

## Revendications

1. Procédé de dénitrification des gaz perdus de dérivation (9) dans une installation de fabrication de clinker, dans lequel
- l'installation présente un four tubulaire tournant (2) pour le frittage de farine crue (3) en clinker et après le four tubulaire tournant (2) dans la direction d'écoulement des gaz perdus du four un calcinateur (7) pour la désacidification de la farine crue (3),
- le four tubulaire tournant (2) présente une chambre d'entrée de four tubulaire tournant (5), qui est reliée directement ou par un puits ascendant de four (6) au calcinateur (7), et
- les gaz perdus de dérivation (9) sont aspirés dans la région de la chambre d'entrée de four tubulaire tournant (5),
**caractérisé par** les étapes suivantes:
- conduire les gaz perdus de dérivation (9) dans une première chambre de mélange (10), dans lequel
- on refroidit les gaz perdus de dérivation (9) dans la première chambre de mélange (10) à une température comprise entre 800°C et 950°C,
- conduire les gaz perdus de dérivation (9) hors de la première chambre de mélange (10) à travers une section de réaction (15) disposée dans une conduite tubulaire (13), dans lequel
- le temps de séjour des gaz perdus de dérivation (9) dans la section de réaction (15) vaut entre 0,5 s et 3 s, et dans lequel
- on injecte dans la section de réaction (15) de l'ammoniac, une solution aqueuse d'ammoniac ou des substances libérant de l'ammoniac (14) pour la dénitrification des gaz perdus de dérivation (9) selon le procédé de réduction non catalytique sélective (SNCR),
- conduire les gaz perdus de dérivation (9) de la section de réaction (15) à une deuxième chambre de mélange (16), dans lequel
- on refroidit les gaz perdus de dérivation (9) dans la deuxième chambre de mélange (16) à une température comprise entre 150°C et 250°C, et
- conduire les gaz perdus de dérivation (9) hors de la deuxième chambre de mélange (16) à au moins un filtre (17) pour le dépoussiérage des gaz perdus de dérivation (9).

2. Procédé selon la revendication 1, dans lequel le temps de séjour des gaz perdus de dérivation (9) dans la section de réaction (15) vaut entre 1 s et 2 s.

3. Procédé selon une des revendications 1 ou 2, dans lequel on introduit comme agent de refroidissement
- dans la première chambre de mélange (10) un, deux ou trois agent(s) de refroidissement du groupe composé de l'air frais (11), l'eau (12) ou la farine crue froide (12a), ainsi que
- dans la deuxième chambre (16) de l'eau (12) et/ou de l'air frais (11).

4. Procédé selon l'une quelconque des revendications 1 à 3, dans lequel on refroidit les gaz perdus de dérivation (9) dans la deuxième chambre de mélange (16) à une température comprise entre 180°C et 220°C.

5. Procédé selon l'une quelconque des revendications 1 à 4, dans lequel on introduit dans la section de réaction (15) au moins un agent sorbant pour l'élimination supplémentaire de polluants des gaz perdus de dérivation (9).

6. Installation de dénitrification de gaz perdus de dérivation (9) lors de la fabrication de clinker, présentant
- un four tubulaire tournant (2) pour le frittage de farine crue (3) en clinker, dans laquelle le four tubulaire tournant (2) présente une chambre d'entrée de four tubulaire tournant (5),
- un calcinateur (7) pour la désacidification de la farine crue (3), dans laquelle la chambre d'entrée de four tubulaire tournant (5) est reliée directement ou par un puits ascendant de four (6) au calcinateur (7), et
- un dispositif d'extraction pour l'extraction des gaz perdus de dérivation (9) hors de la région de la chambre d'entrée de four tubulaire tournant (5), **caractérisée en ce que**
- il est prévu une première chambre de mélange (10) pour le refroidissement des gaz perdus de dérivation (9) extraits de la région de la chambre d'entrée de four tubulaire tournant (5) à une température comprise entre 800°C et 950°C,
- il est prévu après la première chambre de mélange (10) dans la direction d'écoulement des gaz une section de réaction (15) disposée dans une conduite tubulaire (13), dans laquelle
- la conduite tubulaire (13) présente des dimensions telles que le temps de séjour des gaz perdus de dérivation (9) dans la section de réaction (15) vaut entre 0,5 s et 3 s, et dans laquelle
- il est prévu dans la région de la conduite tubulaire (13) au moins un dispositif pour l'injection d'ammoniac, d'une solution aqueuse d'ammoniac ou de substances libérant de l'ammoniac (14) dans la section de réaction (15) pour la dénitrification des gaz perdus de dérivation (9) selon le procédé de réduction non catalytique sélective (SNCR),
- une deuxième chambre de mélange (16) est disposée après la section de réaction (15) pour le refroidissement des gaz perdus de dérivation (9) à une température comprise entre 150°C et 250°C, et **en ce que**
- au moins un filtre (17) est disposé après la deuxième chambre de mélange (16) pour le dépoussiérage des gaz perdus de dérivation (9).

7. Installation selon la revendication 6, **caractérisée en ce que** la conduite tubulaire (13) présente des dimensions telles que le temps de séjour des gaz perdus de dérivation (9) dans la section de réaction (13) vaut entre 1 s et 2 s.

8. Installation selon une des revendications 6 ou 7, **caractérisée en ce qu'**un ventilateur (18) est disposé après ledit au moins un filtre (17) dans la direction d'écoulement des gaz.

9. Installation selon l'une quelconque des revendications 6 à 8, **caractérisée en ce qu'**il est prévu dans la région de la conduite tubulaire (13) au moins un dispositif pour l'introduction d'au moins un agent sorbant dans la section de réaction (15) pour une élimination supplémentaire de polluants des gaz perdus de dérivation (9).
